Europäisches Patentamt

European Patent Office

Office européen des brevets

(19)

(11) EP 0 898 111 A2

(12) EUROPEAN PATENT APPLICATION

(43) Date of publication:
24.02.1999 Bulletin 1999/08

(51) Int Cl.⁶: F16L 41/03

(21) Application number: 98306640.8

(22) Date of filing: 19.08.1998

(84) Designated Contracting States:
AT BE CH CY DE DK ES FI FR GB GR IE IT LI LU
MC NL PT SE
Designated Extension States:
AL LT LV MK RO SI

(30) Priority: 20.08.1997 GB 9717563

(71) Applicant: Accesorios de Tuberia De Corbre S.A.
14080 Cordoba (ES)

(72) Inventor: Fuentes, Antonio Rodriguez
14014 Cordoba (ES)

(74) Representative: Lawrence, John
Barker Brettell
138 Hagley Road
Edgbaston
Birmingham B16 9PW (GB)

(54) A method and fitting for the intersection of pipes

(57) A method and a fitting 14 to allow two intersecting pipes 10 and 12 to cross one another in a manner resulting in the region of pipe intersection standing off by only a small amount from a wall carrying the pipes. The fitting 14 of a cross shape has an internal chamber 16 surrounding with an annular gap the crossing pipe 10 extending through the fitting and sealed thereto at socket parts 18, 20. The pipe 12 is interrupted into two sections 26 and 28 each sealed in a respective socket part 22 or 24. The pipes 10 and 12 lie on a common plane, and the total thickness, measured in a plane perpendicular to said common plane of the combination of the fitting 14 and the pipes 10 and 12, in the region of intersection of the pipes in less than, or approximately equal to, the sum of the external diameters of the two pipes 10 and 12.

Figure 2

## Description

This invention relates to a method and to a fitting which are primarily intended for improving domestic pipe networks but have application to any pipe networks.

In existing pipe networks, when two intersecting, often perpendicular, pipes intersect one another they must be arranged so that one of the pipes bends around the other. This has a number of disadvantages.

Generally pipes are arranged in clips along a wall. The presence of the clips means that a pipe has a base clearance from the wall even when it is running along the wall. Therefore, should a pipe be made to bend around another pipe the amount that the bent pipe projects from the wall is significantly increased. This increased projection can lead to increased risk of damage of the pipe, for instance by the pipe being knocked, etc.

Pipes can also exist in significant lengths, perhaps several meters in a single stretch. Such lengths will be affected significantly by thermal expansion of the pipes especially if the pipe intermittently carries hot fluid. Therefore, should a pipe be bent around a another pipe the thermal expansion can cause the pipes to rub and/ or push against one another. This rubbing interaction can cause damage to one or both of the pipes.

An aim of the present invention is to provide a method and a fitting allowing two intersecting pipes to cross one another in an improved manner.

According to a first aspect of the invention there is provided a method of allowing two intersecting pipes to cross one another comprising providing a fitting accommodating said pipes, wherein a total thickness, measured in a first plane perpendicular to a second plane in which the two intersecting pipes exist, of a combination of said fitting and pipes at a thickest region of said combination, in a region of intersection of the two pipes, in less than, or approximately equal to, the sum of the diameters of the two pipes.

According to a second aspect of the invention there is provided a method of allowing two intersecting pipes to cross one another comprising providing a fitting accommodating said pipes, wherein a total thickness, measured in a first plane perpendicular to a second plane in which the two intersecting pipes exist, of the fitting at a thickest region of said fitting, in a region of intersection of the two pipes, is less than, or approximately equal to, the sum of the diameters of the two pipes.

An advantage of each aspect of the method is that the overall thickness of the region of intersection is much less than with prior methods of allowing pipes to cross one another and therefore any inconvenience of having a substantial intersection thickness is reduced. Previous techniques comprised bending one of the pipes around the other; the region of intersection therefore comprised two pipe diameters and a gap between them.

Preferably each aspect of the method allows two perpendicular pipes to cross one another. Generally pipes are arranged to run either vertically or horizontally and therefore any junctions between two pipes are likely to be perpendicular. Allowing two perpendicular pipes to cross will therefore increase the usefulness of the method.

Either aspect of the method may further comprise rigidly connecting the two pipes together, providing a more rigid and robust pipe network. This also avoids rubbing of the pipes against each other, and avoids problems associated with that.

The fitting may be slid onto a first one of the two pipes and may be moved along the first pipe to substantially a place where the intersection is required. This can provide a convenient way of positioning the intersection.

A first one of two portions of a second of the two pipes may then be connected to the fitting followed by a second one of the two portions of the second pipe. Connecting the second of the pipes in two portions in this manner provides a convenient way of connecting the fitting.

The fitting may then be sealed to (and/or mechanically affixed to) a first one of the two pipes (once the fitting has been correctly positioned). This creates a fluid tight seal so that fluid flowing through the second pipe and into the fitting does not escape through a junction between the first pipe and the fitting.

Fluid may enter the fitting via the second pipe and may flow between an outer wall of the first pipe and an inner wall of the fitting so defining a fluid path for the fluid travelling in the second pipe.

Either aspect of the method may further comprise soldering the first pipe and both portions of the second pipe to the fitting. Soldering is a readily available technique well know to plumbers.

Either aspect of the method may further allow a second pipe to be installed, and intersected with, an existing pipe in which case a short section may be removed from the existing pipe, the fitting then slid onto the existing pipe and the section reconnected into the existing pipe.

In a more general sense, a or the first one of said pipes can pass through the fitting.

In an alternative embodiment, the first (or existing pipe) may not pass through the fitting and the fitting may instead pass in close co-operation with the first pipe. Thus, a or the first one of said pipes can be external of the fitting crossing said first one of the pipes.

An alternative way of thinking of either aspect of the method would be as a method of allowing two pipes to cross one another comprising providing a portion of the second pipe (or a fitting on the second pipe) of increased width but of decreased depth. To this end, at a said region a width dimension of the fitting measured along a first direction is a greater than an internal depth dimension of the fitting measured along a second direction transverse to both said first direction and to a direction of flow of fluid along a said pipe at the fitting.

Such a method allows the aim of the invention to be realised. We can also avoid, if we wish, placing a fitting entirely surrounding one of the pipes.

Each aspect of the method of allowing two pipes to intersect is also advantageous because no bending to the second pipe is required. Bending a pipe without buckling it is a skilful task and to remove the need to bend a pipe will make interconnecting two pipes accessible to a wider range of people ( to those without the necessary skills or tools to bend pipes). According to a third aspect of the invention there is provided a crossover fitting to allow two intersecting pipes to cross one another, said fitting comprising an inlet aperture and an outlet aperture, and a chamber, the apertures being adapted to be attached to respective inlet and outlet pipe sections, the chamber being provided between the inlet and outlet apertures and communicating with them, said chamber being shaped to accommodate a crossing pipe and having sufficient volume for a relatively substantially free flow from the inlet aperture to the outlet aperture through the chamber when said crossing pipe is present; and wherein, in use, when the pipe fitting is fitted to or over a crossing pipe a total thickness, measured in a first plane perpendicular to a second plane in which the crossing pipe and said inlet and outlet pipe sections exist, of a combination of the fitting and said crossing pipe and said pipe sections at a thickest region of said combination, in a region of intersection of the two pipes, is less than, or approximately equal to, the sum of the diameters of the crossing pipe and a said pipe section.

"Relatively substantially free flow" means that the chamber is of sufficient volume so that flow from the inlet aperture, through the chamber, to the outlet aperture is acceptable, in use, in comparison with the flow that would occur in the inlet and outlet pipe sections if the fitting were not present.

Clearly, an advantage of such a fitting is that the overall thickness of the intersection of the two pipes is reduced when compared with the known conventional bent pipe form of intersection.

In one embodiment, the distance from an exterior of the crossing pipe adjacent the fitting to the outermost exterior (relatively to the crossing pipe) of the chamber that overlays the crossing pipe is, in use, preferably less than the diameter of the crossing pipe. Preferably that distance is about half of the diameter of the crossing pipe (but it could be substantially $\frac{3}{4}$, $\frac{2}{3}$, $\frac{1}{3}$, $\frac{1}{4}$ or perhaps even a smaller fraction of the diameter).

The fitting is preferably adapted to allow pipes to intersect at a right angle. Pipes are generally arranged to run either vertically or horizontally and therefore the provision of such a fitting will be more useful than the provision of a fitting allowing pipes to intersect at other angles. Thus, the fitting may be cross-shaped. However, a fitting allowing pipes to intersect at other angles may be provided. Perhaps a fitting may be provided allowing pipes to intersect at substantially 30°, 45°, 60° or other angles. Providing other angles provides greater flexibility for the installation of pipe networks.

The chamber may be bulbous and the inlet and outlet apertures may be annular spigots adapted to connect to the inlet and outlet pipes so allowing simple connection of the inlet and outlet pipes.

The chamber may be cylindrical and may have a pair of tubular socket extensions extending away along one line and a second pair of tubular sockets extending away from the chamber along a second line. The first and the second lines may be in the same plane and are preferably at 90° to each other. It will be realised that should the inlet, pipe section, the outlet pipe section and the crossing pipes be straight and connected to the sockets then the lines between the sockets will define the lines of the intersecting pipes connected to the sockets and therefore as discussed above that the first line and the second line could be at angles other than a right angle.

A width of the chamber in the direction of the crossing pipe (transverse to the direction of the inlet and outlet pipe sections) may be greater than the diameter of each of the inlet and outlet pipe sections. Preferably at least 10% greater, or 20%, or 30%, or 40%, or 50%, or 60%, or 70%, or 80%, or 90% or 100% greater.

In one embodiment a said fitting is provided having an inlet port and an outlet port disposed in or on a plane, and said chamber is defined in part by a shaped rear wall which is adapted to overlay the crossing pipe and at least in part engage and/or follow an exterior surface of the crossing pipe, and the chamber having front wall spaced at least in part from the rear wall of the chamber by a distance in a direction perpendicular to said plane that is less that the diameter of the inlet port.

A further advantage of an intersection provided by or enabled by each aspect of the invention is that it is easier to fit insulation to the both of the pipes. Previously when the pipes were unconnected and had a gap between them it was difficult to lag the pipes properly.

The fitting may have a said chamber portion which is of increased width but narrower depth when compared to one or a first said pipe and/or the other or a second said pipe. This ensures that the flow through the second pipe is not overly restricted even though the first pipe may be a said crossing pipe defining a portion of the fluid path.

Attachment means comprising a length of tube of complementary diameter to the second pipe may be provided on the chamber portion so providing a convenient way of attaching the second pipe.

Two attachment means may be provided, so allowing the second pipe to be joined to the fitting in two portions.

Preferably the first pipe is received axially of the chamber and passes through the chamber. Sealing means may be provided at edge regions of the chamber allowing the first pipe to be sealed to the chamber.

Preferably the sealing means is of complementary diameter to the first pipe so providing a suitable joint to be sealed between the first and second pipes.

The fitting may be fabricated from copper. This makes the fitting compatible with standard domestic plumbing.

There may be a network of pipes intersecting one another, the network comprising at least one fitting according to the third aspect of the invention.

The network may be mounted on a wall.

Each aspect of the invention will now be further described, by way of example, with reference to the accompanying drawings, in which

**Figure 1** is a side elevation of a prior art method of allowing two pipes to be crossed;

**Figure 2** is a plan view of one embodiment of a pipe fitting formed according to the third aspect of the invention in performance of a method according to the first and second aspects;

**Figure 3** is a cross section on line A-A of Figure 1;

**Figure 4** is a fragmentary perspective view of the fitting in Figure 1; (with a portion cut away at 60);

**Figure 5** is a plan view of another embodiment of a pipe fitting according to the third aspect of the invention in performance of a method according to the second aspect;

**Figure 6** is a side elevation on line B-B of the fitting in Figure 5;

**Figure 7** is a side elevation of a modification of the fitting in Figure 5, formed according to the third aspect of the invention in performance of a method according to the first and second aspects; and

**Figure 8** is a cross-section on a longitudinal axis showing substantially half of a further embodiment of a pipe fitting formed according to the third aspect of the invention for performing a method according to the first and second aspects.

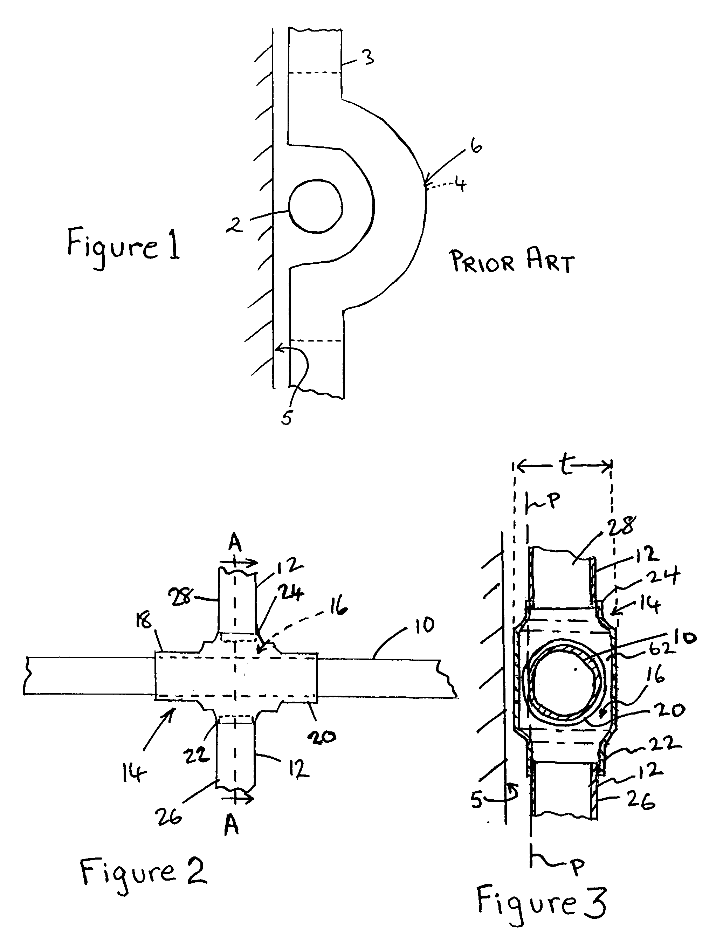

A prior art technique for intersecting two pipes is diagrammatically shown in Figure 1.

Previously when it has been required to intersect a first pipe 2 and a second pipe 3 mounted on a wall 5, the second pipe 3 has been bent so that it passes around the first pipe 2. It is also known to use "u" shaped couplings 4 which pass around the first pipe 2 to join two portions of the second pipe.

A region 6 of the second pipe 3 (or "u" shaped coupling 4) which is furthest from the wall 5 protrudes a substantial distance from the wall 5. This is exacerbated because the first pipe 2 and the second pipe 3 are not flush to the wall 5 to which they are adjacent. This region 6 of the second pipe 3 (or "u" shaped coupling 4) is therefore readily susceptible to knocks and consequent damage.

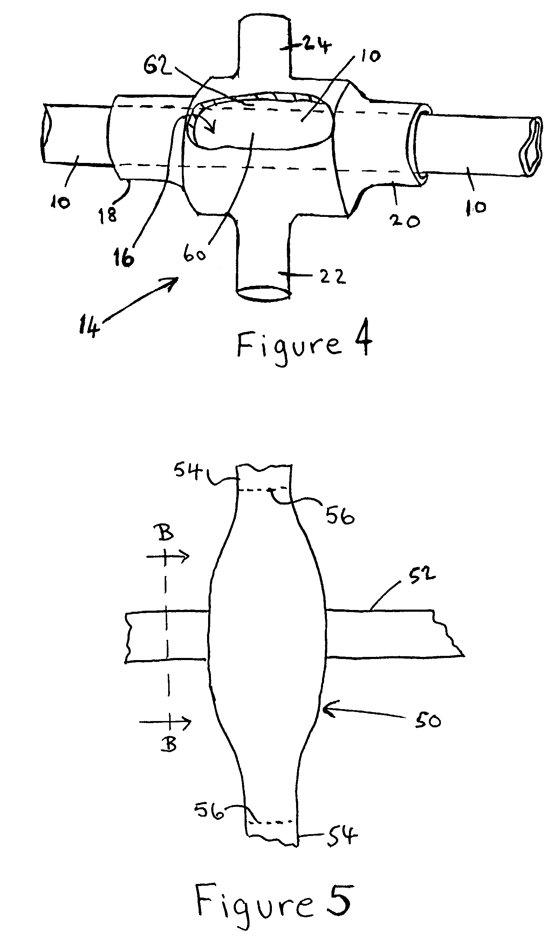

Figures 2 and 3 show an intersection on a wall 5, of a first pipe 10 and a second pipe 12 using a cross over fitting according to one embodiment of the present invention. A fitting 14 has been used to interconnect the first (or crossing pipe) and second pipes 10, 12. The pipes 10 and 12 can each have a substantially uniform external diameter, but it will be appreciated that those pipes need not be of the same diameter.

The fitting 14 has a chamber 16 which is of larger diameter than the first (inlet aperture) and/or second (outlet aperture) pipe 10, 12. Portions of tube 18, 20 of complementary diameter to the first pipe 10 are provided as sealing means to seal the chamber 16 to the first pipe 10 which extends through the chamber. Further two attachment means 22, 24 (or inlet and outlet apertures or spigots) comprising portions of tube of complementary diameter to the second pipe 12 are provided to seal the chamber 16 to the second pipe 12 which is interrupted within the fitting 14.

In use, the fitting 14 is slid onto a length of first pipe 10 so that it is in roughly the correct position for the intersection of the first and second pipes 10, 12. It will be understood from the above that the first pipe 10 is uncut and passes through the fitting unaffected; a complete path being provided by the first pipe 10 through the fitting 14 through which path fluid can pass.

A first section or portion 26 of the interrupted second pipe 12 is connected to the attachment means 22 and soldered in place so providing a fluid tight seal between the chamber 16 and this first portion 26 of the second pipe 12.

A second section or portion 28 of the interrupted second pipe 12 is connected to the other attachment means 24 and again is soldered in place. Finally the sealing means 18, 20 are soldered to the first pipe 10 so sealing the chamber 16 to the first pipe 10.

With reference to Figure 3, it will be understood that the two intersecting pipes 10 and 12 lie in or on a plane P (shown in dash lines), and in a plane perpendicular thereto the combination of the fitting 16 and the pipes 10 and 12 accommodated by the fitting has a greatest total thickness t the region of intersection of the pipes. The thickness dimension t is less than, or approximately or substantially equal to, the sum of the external diameters of the pipes 10 and 12.

The attachment means 22, 24 and the sealing means 18, 20 can be thought of as tubular socket extensions or as inlet and outlet ports.

The chamber 16 is of larger diameter that the first pipe 10 and there is therefore a space 62 between the outer surface of the first pipe 10 (shown partly in dotted lines in Figure 4) and the inner surface of the chamber 16. Fluid entering into the chamber 16 via either of the attachment means 22, 24 is therefore free to flow around the exterior of the first pipe 10 and out of the other attachment means. Thus, it will be understood that an external portion of the first pipe 10 will be present in or exposed to the flow of fluid between the portions 26 and 28 of the second pipe 12 attached to the attachment means.

Because the first pipe 10 passes through the fitting 14 uninterrupted the fluid flowing through the first pipe 10 is not affected by the fitting.

It has been found that the preferred method of fabricating the fitting 14 is by liquid forming. A tube of suitably dimensioned material (usually copper) is inserted in to a female die. The ends of the tube are then sealed and liquid injected into the tube at pressures of approximately 1200 bar. The pressure of the liquid causes the tube to expand and take the shape of the die.

The skilled person will realise that to avoid the flow through the second pipe 12 becoming unduly restricted because of the presence of the first pipe 10 within the flow path of the fluid travelling in the second pipe 12, the chamber 16 must be of sufficient diameter.

It will be realised by the skilled person that the pipes 10, 12 provide mutual support for one another.

In the embodiment shown in Figure 4, the chamber 16 has a volume 1½ times that of a pipe having the diameter of the pipes 10, 12 and the same width axially as the chamber 16.

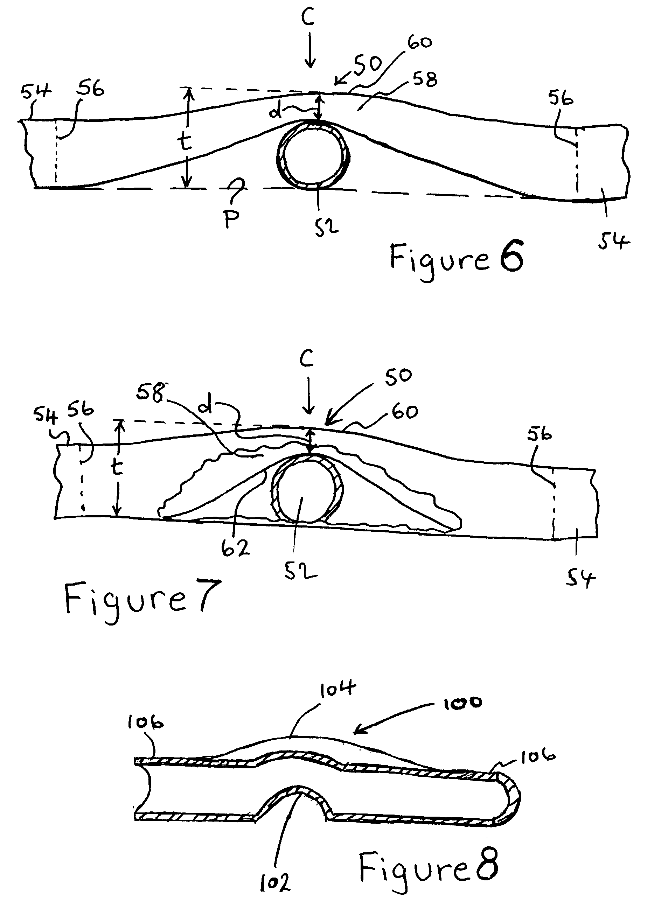

Figures 5 to 7 show embodiments of the invention slightly different from that shown in Figures 2 to 4.

In Figure 5 a fitting 50 is provided allowing a first 52 and a second 54 pipe to cross. At the intersection portion of the two pipes the fitting 50 when viewed in plan looks as though it is a section of the second pipe 54 of greater diameter than the remainder of the second pipe 54. The fitting 50 has substantially co-axial inlet and outlet ports 56 connected to sections or portions of the pipe 54.

When viewed in side elevation as shown in Figures 6 and 7 either version of the fitting 50 provides a path which along transverse direction C has an internal depth dimension d which is less than the internal diameter of the second pipe 54. It will be appreciated however, that the overall internal cross-sectional area of the fitting at right-angles to fluid flow along the pipe 54, can be made to remain the same as that of the second pipe 54. Thus, the flow rate of fluid through the second pipe 54 should be relatively unaffected by the fitting. (The flow rate of fluid through the first pipe 52 is unaffected as the first pipe simply runs through the intersection of the two pipes). The depth dimension d is preferably about half of the external diameter of the pipe 52, but may be in the range of 3/4 to 1/4 (for example 3/4, 2/3, 1/2, 1/3, 1/4) of said diameter or even a lesser fraction.

The fitting 50 in Figures 5 and 6 does not require the first pipe 52 entirely to pass through the fitting 50, whereas in the modification of the fitting 50 shown in Figure 7 the first pipe 52 wholly passes through the fitting.

Again, it will be understood that the two intersecting pipes 52 and 54 lie in or one the plane P (Figure 6) and in a plane perpendicular thereto the combination of the fitting 50 and the pipes 52 and 54 accommodated by the fitting has a greatest total thickness t at the region of intersection of the pipes. The thickness dimension t is less than, or approximately or substantially equal to the sum of the external diameters of the pipes 52 and 54.

In Figures 5 to 7, a chamber is indicated at 58 having a front wall 60 spaced from a rear wall 62 which overlays the pipe 52 and which, particularly in Figure 7, is adapted to engage and/or follow an external contour of the pipe 52.

Both of the embodiments of Figures 5 and 6 and Figures 5 and 7 have the advantage that the first pipe 52 is not exposed to the fluid flow contained in the second pipe 54 as is the case with the embodiment shown in Figures 2 to 4 (and is consequently not subject to cavitation or erosion caused by the fluid impinging upon it). However, the embodiment shown in Figure 6 does not rigidly attach the first and the second pipes 52 and 54 together, and therefore may not offer all of the advantages previously discussed.

It will be appreciated by the skilled person that it may be easier to insulate two pipes which intersect one another using the fittings of the Figures 2 to 8. Should a single pipe simply be bent around a first pipe then invariably there will be a substantial gap between the two pipes. This can be difficult to fill with lagging material, for example, it may be too narrow to accommodate lagging or may be too wide to allow lagging to be wrapped around both of the pipes simultaneously.

Figure 8 shows a general principle of the third aspect of the invention for use in the method according to the first or second aspect. A fitting 100 has a chamber 104. The chamber 104 is provided which when considered in the vertical plane of the Figure is of less width than an attachment means or an inlet or outlet port 106 but is wider than a said attachment means or port 106 in a plane perpendicular to the first plane considered. This arrangement provides a chamber which is adapted to cross a crossing pipe (the crossing pipe is received in, perhaps complementary, recess 102) and yet has a large enough cross sectional area to maintain a sufficient flow rate of fluid through the fitting 100.

**Claims**

1. A method of allowing two intersecting pipes (10, 12; 52, 54) to cross one another **characterised in that** it comprises providing a fitting (14; 50; 100) accommodating said pipes, wherein a total thickness (t), measured in a first plane perpendicular to a second plane (p) in which the two intersecting pipes (10, 12; 52, 54) exist, of a combination of said fitting (14; 50; 100) and pipes (10, 12; 52, 54) at a thickest region of said combination (10, 12, 14; 50, 52, 54) in a region of intersection of the two pipes, is less than, or approximately equal to, the sum of the diameters of the two pipes (10, 12; 52, 54).

2. A method of allowing two intersecting pipes (10, 12; 52, 54) to cross one another **characterised in that** it comprises providing a fitting (14; 50; 100) accommodating said pipes, wherein a total thickness (t), measured in a first plane, perpendicular to a second plane (p) in which the two intersecting pipes (10, 12; 52, 54) exist, of the fitting (14; 50; 100) at a thickest region of said fitting (14; 50; 100) in a region of intersection of the two pipes, in less than, or approximately equal to, the sum of the diameter of the two pipes (10, 12; 52, 54).

3. A method as claimed in claim 1 or claim 2, **characterised in that**, when placing the fitting (14; 50; 100) in position at said region of intersection, the fitting is slid onto a first one of said pipes (10; 52) and moved along said first pipe (10; 52) to substantially a place at which the intersection is required.

4. A method as claimed in claim 3, **characterised in that**, the other or second pipe (12; 54) is connected to the fitting (14; 50; 100) when the fitting is disposed at said place.

5. A method as claimed in claim 4, **characterised in that**, said first pipe (10; 52) is sealed and/or mechanically affixed to the fitting (14; 50; 100) after the second pipe (12; 54) is connected to the fitting.

6. A method as claimed in any one of claims 4 to 6, **characterised in that**, a section of said first pipe (10;52) is removed, the fitting (14; 50; 100) is slid onto the first pipe from where said section has been removed, and thereafter the section is reconnected back into the first pipe.

7. A method as claimed in any one preceding claim, **characterised in that**, at said region a width dimension of the fitting (50) measured along a first direction is greater than an internal depth dimension (d) of the fitting measured along a second direction (c) transverse to both said first direction and to a third direction which is a direction of flow of fluid along a said pipe at the fitting.

8. A method as claimed in any one preceding claim, **characterised in that,** a or the first one of said pipes (10; 52) passes through the fitting (14; 50; 100).

9. A method as claimed in any one preceding claim, **characterised in that**, the two intersecting pipes (10, 12; 52, 54) are connected together substantially rigidly at said fitting (14; 50; 100).

10. A method as claimed in any one preceding claim, **characterised in that,** a or the first one (52) of said pipes (52, 54) is external of the fitting (50) crossing said first one of the pipes.

11. A method as claimed in any of claims 1 to 9, **characterised in that**, fluid enters the fitting (14) via a or the second one of said pipes (12) and flows through the fitting along a path (16) between an outer wall of a or the first one of said pipes (10) and an inner wall of the fitting (14).

12. A crossover fitting (14; 50; 100) to allow two intersecting pipes (10, 12; 52, 54) to cross one another, **characterised in that**, said fitting comprises an inlet aperture (22; 106) and an outlet aperture (24; 106), and a chamber (16; 58; 104), the apertures being adapted to be attached to respective inlet and outlet pipe sections (26, 28; 54) the chamber (16; 58; 104) being provided between the inlet and outlet apertures and communicating with them, said chamber (16; 58; 104) being shaped to accommodate a crossing pipe (10; 52) and having sufficient volume for a relatively substantially free flow of fluid from the inlet aperture (22; 106) to the outlet aperture (24; 106) through the chamber when said crossing pipe (10; 52) is present; and wherein, in use, when the pipe fitting (14; 50; 100) is fitted to or over a crossing pipe (10; 52) a total thickness (t), measured in a first plane perpendicular to a second plane (p) in which the crossing pipe (10) and said inlet and outlet pipe sections (26, 28; 54) exist, a combination of the fitting (14; 50; 100) and said crossing pipe (10; 52) and said pipe sections (26, 28; 54) at a thickest region of said fitting, in a region of intersection of the two pipes (10, 12; 52, 54), in less than, or approximately equal to, the sum of the diameters of the crossing pipe (10; 52) and a said pipe section (26, 28; 54).

13. A fitting as claimed in claim 12, **characterised in that**, said fitting (14; 50; 100) is arranged such that in use the two intersecting pipes (10, 12; 52, 54) intersect at substantially a right angle.

14. A fitting is claimed in claim 12, **characterised in that**, said fitting is arranged such that in use the two intersecting pipes intersect at an acute angle.

15. A fitting as claimed in any one of claims 12 to 13, **characterised in that**, when the fitting (50) in use in association with a said crossing pipe (58), and the fitting is so arranged that said chamber has, along said direction, a width which is greater than the diameter of an inlet opening (56) to the chamber or of an outlet opening (56) from the chamber.

**16.** A fitting as claimed in claim 15, **characterised in that**, said width is at least substantially 10% or 20% or 30% or 40% or 50% or 60% or 70% or 80% or 90% or 100% greater than said diameter.

**17.** A fitting (14) as claimed in any one of claims 12 to 16, **characterised in that**, said chamber (16) is so arranged that, when the fitting is in use, the crossing pipe (10) passes through the chamber (16) and the chamber surrounds the crossing pipe.

**18.** A fitting (50) as claimed in claim 15 or claim 16, in which an inlet port (56) comprises said inlet opening, an outlet port (56) comprises said outlet opening, said ports (56) lies in or on the second plane (p), the chamber (58) has a rear wall (62) and a front wall (60) which is spaced at least in part from the rear wall by a distance (d) substantially perpendicular to said second plane, and the rear wall (62) is so adapted that, when the fitting (50) is in use, said rear wall (62) can overlay and at least in part engage and/or follow an external contour of said crossing pipe (52).

**19.** A fitting as claimed in claim 18 and adapted to be used with a particular size of said crossing pipe (52), and wherein said distance (d) is:-

   (i) less than substantially the diameter of said crossing pipe, or
   (ii) less than substantially half of the diameter of said crossing pipe, or
   (iii) substantially 3/4 or 2/3 or 1/2 or 1/3 or 1/4 or a smaller fraction still of the diameter of said crossing pipe.

**20.** A network comprising two or more pipes (10, 12; 52, 54) **characterised in that**, the two or at least two of said pipes intersect by means of the method claimed in any one of claims 1 to 12, or **characterised in that**, the two or at least two of said pipes intersect and are provided with a fitting as claimed in any one of claims 13 to 19.

**21.** A wall (5) **characterised in that,** it is provided with a network as claimed in claim 20, or **characterised in that**, it is provided with at least two intersecting pipes allowed to intersect by means of the method claimed in any one of claims 1 to 12, or **characterised in that**, it is provided with a fitting as claimed by any one of claims 13 to 19.

Figure 1

PRIOR ART

Figure 2

Figure 3

Figure 4

Figure 5

C

50

60

54 56

58

d

t

56

P

52

54

Figure 6

C

50

58

d

60

54 56

t

56

62

52

54

Figure 7

104

100

106

106

102

Figure 8